**Europäisches Patentamt**

(19) **European Patent Office**

**Office européen des brevets**

(11) Veröffentlichungsnummer: **0 121 849**
**B1**

(12) # EUROPÄISCHE PATENTSCHRIFT

(45) Veröffentlichungstag der Patentschrift:
**12.06.87**

(51) Int. Cl.⁴: **F 16 K 11/06**

(21) Anmeldenummer: **84103293.1**

(22) Anmeldetag: **26.03.84**

(54) **Ventileinrichtung mit einstellbarer Funktion.**

(30) Priorität: **01.04.83 US 481192**

(43) Veröffentlichungstag der Anmeldung:
**17.10.84 Patentblatt 84/42**

(45) Bekanntmachung des Hinweises auf die Patenterteilung:
**12.06.87 Patentblatt 87/33**

(84) Benannte Vertragsstaaten:
**DE FR GB IT**

(56) Entgegenhaltungen:
**DE-A-2 038 898**
**DE-C-194 787**
**GB-A-1 072 141**

(73) Patentinhaber: **American Standard Inc., 40 West 40th Street, New York, N.Y. 10018 (US)**

(72) Erfinder: **Lyons, Michael D., 3713 Red River Drive, Lexington Kentucky 40503 (US)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

## Beschreibung

Diese Erfindung betrifft eine Ventileinrichtung mit einstellbarer Funktion gemäß dem Oberbegriff des Patentanspruchs 1. Eine derartige Ventileinrichtung ist aus der GB-A-1 072 141 bekannt.

In Druckmittelventilen dieses Typs mit einer in axialer Richtung verschiebbaren Platte wird die Ventilfunktion durch die Ausbildung dieser Platte und ihrem Stellungsverhältnis zu entsprechenden Bohrungen in einer gehäusefesten Platte des Ventils bestimmt. Das Stellungsverhältnis zwischen Aussparungen oder Öffnungen in der verschiebbaren Platte zu den entsprechenden Aussparungen oder Bohrungen in der gehäusefesten Platte legt das Ventil auf eine spezielle Funktion fest. Wenn eine andere Ventilfunktion gewünscht wird, ist es notwendig, eine neue verschiebbare Platte oder eine neue gehäusefeste Platte, welche die gewünschte neue Funktion erbringen, einzusetzen. Dabei ist für die Herstellung nachteilig, daß viele unterschiedliche Ausführungen von verschiebbaren Platten oder gehäusefesten Platten herzustellen und zu bevorraten sind, um die Forderungen von Anwendern erfüllen zu können. Anwender von solchen Ventilen ihrerseits müssen eine große Vielfalt von Ventilen auf Lager halten, um alle logischen Funktionen, die in den verschiedenen Anwendungsfällen solcher Ventile gefordert werden, ermöglichen zu können. Wenn ein Ventil einmal in einem speziellen Anwendungsfall eingesetzt ist, ist seine Funktion im allgemeinen durch seine Innenteile festgelegt, und jede Abweichung von der ursprünglichen Funktion erfordert den Ersatz der Ventileinheit durch ein neues und unterschiedliches Modell. Der Mangel an Anpaßbarkeit und die Notwendigkeit hoher Bestände unterschiedlicher Ventiltypen ist ein Problem, besonders auf dem Gebiet von Steuerventilen, wo eine große Anzahl unterschiedlicher Logikfunktionen gefordert wird.

Aus der DE-C-194 787 ist eine Anordnung von in axialer Richtung verschiebbarer und mit Durchgangsbohrungen versehener Platte bekannt. Die letztgenannte Platte ist in diesem Fall axial im Gehäuse festgelegt, normal zur Schieberichtung der verschiebbaren Platte hingegen im Gehäuse beweglich. Darüberhinaus ist diese Platte nicht zwischen der verschiebbaren Platte und Kanälen im Gehäuse angeordnet.

Aus der DE-A-2 038 898 ist eine Ventileinrichtung mit einer in axialer Richtung verschiebbaren Platte und einer gehäusefesten Platte bekannt, welche letztere zwischen der axial verschiebbaren Platte und Gehäusekanälen angeordnet ist, jedoch Durchgangsbohrungen mit gleichbleibendem Durchmesser aufweist.

Der Erfindung liegt die Aufgabe zugrunde, eine Ventileinrichtung der eingangs erwähnten Art zu schaffen, mit welcher eine Vielzahl von Ventilfunktionen durch die besondere Anordnung von Innenteilen erreichbar und außerdem die einmal vorgegebene Ventilfunktion unter Vermeidung zusätzlicher Bauteile änderbar ist.

Diese Aufgabe wird durch die in dem Patentanspruch 1 angegebene Erfindung gelöst. Weiterbildungen und vorteilhafte Ausgestaltungen der Erfindung sind in den Unteransprüchen aufgezeigt.

Auf diese Weise ist eine Ventileinrichtung aufgezeigt, in welcher die verschiedenen Ventilstellungen durch die relativ zueinander gleitend verschiebbare Anordnung einer bewegbaren Platte und einer lösbar gehäusefest montierten Platte erzielt werden, wobei die spezielle Funktion einer Ventilstellung allein durch Drehen oder Wenden einer der beiden Platten geändert werden kann. Die so geschaffene Ventileinrichtung ist auf einfache und wirtschaftliche Weise mit einem einzigen Satz von Teilen aufbaubar und in jeder Ventilstellung auf die jeweils gewünschte Funktion einstellbar.

Weitere Vorteile und Eigenschaften der Erfindung sind der nachfolgenden Beschreibung entnehmbar. Die Erfindung wird nachfolgend anhand eines in der Zeichnung dargestellten Ausführungsbeispiels beschrieben:

Die in der Zeichnung dargestellten Figuren zeigen:

Fig. 1 einen Längsschnitt durch eine Ventileinrichtung mit geschlossener Mittelstellung.

Fig. 2 die Draufsicht der gehäusefest montierten Platte nach Fig. 1.

Fig. 3 a-b einen Längsschnitt durch die verschiebbare Platte und die gehäusefest montierte Platte. In drei Ventilstellungen der Ventileinrichtung nach Fig. 1, jedoch mit umgekehrt gehäusefest montierter Platte (s. Richtungspfeil als Einbauhilfe).

Fig. 4 a-b einen Längsschnitt durch die verschiebbare Platte und die gehäusefest montierte Platte in drei Ventilstellungen der Ventileinrichtung nach Fig. 1.

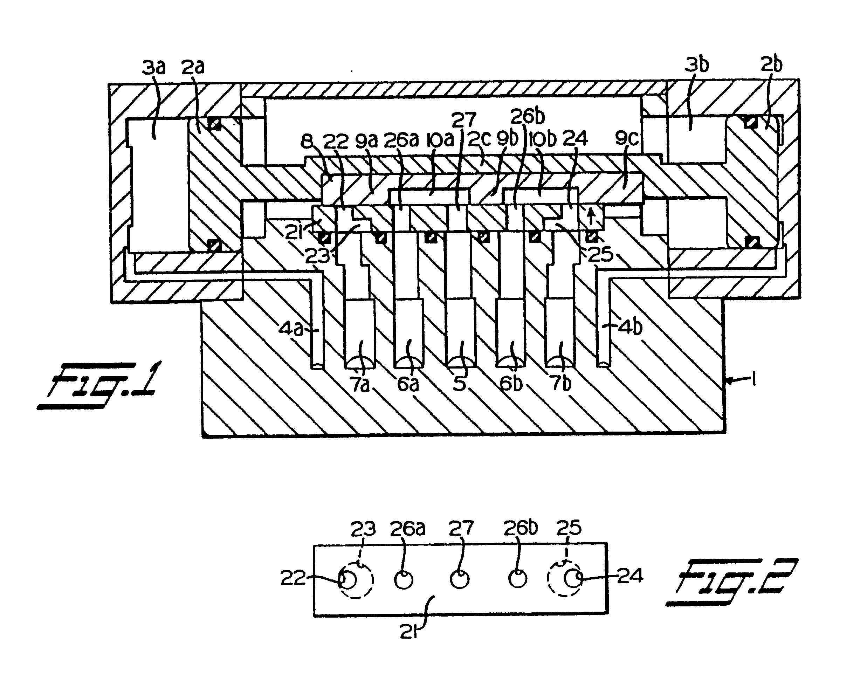

In Fig. 1 ist ein gegenwärtig bevorzugtes Ausführungsbeispiel einer druckluftbetätigten Ventileinrichtung gezeigt. Es versteht sich, daß die Erfindung auch in elektrisch, hydraulisch, manuell oder anders gesteuerten Ventilen angewendet werden kann.

Fig. 1 zeigt ein Gehäuse 1 mit Betätigungsmitteln, welche durch zwei entgegengesetzt angeordnete Kolben 2a und 2b und dieser zugeordnete Druckkammern 3a und 3b gebildet sind. Die Kolben 2a und 2b sind durch ein Mittelteil 2c starr miteinander verbunden, so daß die Kolben 2a und 2b und der Mittelteil 2c innerhalb des Gehäuses 1 axial als eine Kolbeneinheit bewegbar sind. Über Steuerleitungen 4a und 4b ist Druckmittel, wie beispielsweise, Druckluft in die zugehörigen Druckkammern 3a und 3b einsteuerbar. Rückstellmittel (nicht gezeigt), beispielsweise Rückstellfedern, dienen dazu, die Kolbeneinheit 2a, 2b und 2c in einer Mittelstellung, in der jeder Kolben 2a und 2b ungefähr in der Mitte der diesen jeweils zugeordneten Druckkammer 3a bzw. 3b ist, zu halten. Den Steuerleitungen 4a und 4b wird alternativ Druckmittel in Abhängigkeit von der gewünschten Stellung der Ventileinrichtung zugeführt. Wenn Druckmittel in die Steuerleitung 4a und dann in die Druckkammer 3a geleitet wird, wird die Kolbeneinheit 2a, 2b und 2c gemäß Fig. 3 nach rechts bewegt. Wenn der Druck in Steuerleitung 4a gelöst wird, führen die Rückstellfedern (nicht gezeigt) die Kolbeneinheit 2a, 2b und 2c in die Mittelstellung zurück. Wenn umgekehrt Druckmittel nur der Steuerleitung 4b und dadurch der Druckkammer 3b zugeführt wird, verschiebt sich die Kolbeneinheit 2a, 2b und 2c in eine volle Stellung nach links, und wenn der Druck in der Steuerleitung 4b gelöst wird, führen die Rückstellfedern (nicht gezeigt) die Kolbeneinheit 2a, 2b und 2c in die Mittelstellung zurück.

Im Bereich des Mittelteils 2c ist eine bewegbare Platte 8 angeordnet, welche sich mit der Kolbeneinheit 2a, 2b und 2c axial gleitend verschiebt oder bewegt. Die auf diese Weise verschiebbare Platte 8 ist innerhalb eines nach unten offenen Kanals des Mittelteils 2c montiert, so daß die Platte 8 leicht ein- oder ausbaubar ist.

Wie in Fig. 1 gezeigt, ist an der verschiebbaren Platte 8 anliegend eine gehäusefest montierte Platte 21 lösbar angeordnet, welche auf einer Seite in gleitendem Kontakt mit der verschiebbaren Platte 8 steht.

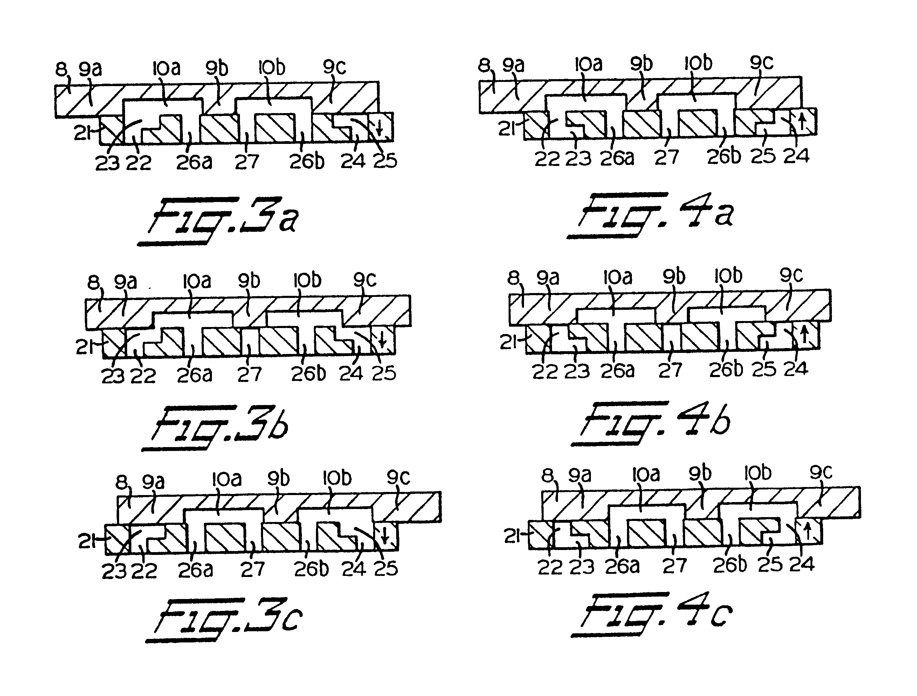

Die gehäusefest montierte Platte 21 weist entsprechend Fig. 2 fünf Durchgangsbohrungen 22, 24, 26a, 26b und 27 auf, welche mit fünf entsprechenden Kanälen 7a, 7b, 6a, 6b und 5 in dichter Verbindung stehen. Über diese Kanäle sind in einem typischen Anwendungsfall andere Logikeinrichtungen bzw. druckmittelbetätigbare Einrichtungen steuerbar. Ein solcher Anwendungsfall kann beispielsweise ein als Linearmotor verwendeter doppeltwirkender Zylinder sein. In diesem Beispiel würde der Kanal 5 mit einer Druckmittelquelle verbunden sein, die Kanäle 6a und 6b wären Auslasse für die Beaufschlagung der jeweiligen Kolbenseite und die Kanäle 7a und 7b wären Entlüftungen bzw. Rückläufe zur Entlastung der jeweiligen Auslaßkammer. Die verschiebbare Platte 8 hat zwei Aussparungen 10a und 10b, welche für eine Druckmittelverbindung zwischen vorbestimmten Paaren von benachbarten Durchgangsbohrungen 22, 24, 26a, 26b und 27 in der gehäusefest montierten Platte 21 sorgen. Felder 9a, 9b und 9c auf der unteren Oberfläche der bewegbaren Platte 8 sperren, dichten oder überdecken benachbarte Durchgangsbohrungen 22, 24, 26a, 26b, 27 in der gehäusefest montierten Platte 21. Wenn beispielsweise in der in Fig. 1 gezeigten Ventileinrichtung eine Druckmittelquelle mit dem Kanal 5 verbunden ist und somit Druckmittel über die Durchgangsbohrung 27 in der Aussparung 10a ansteht, dann wird das Druckmittel abwärts in die Durchgangsbohrung 26a und durch diese hindurch in den Kanal 6a gelenkt. Dabei ist der Kanal 6b über die Durchgangsbohrung 26b, die Aussparung 10b und die Durchgangsbohrung 24 und eine weitere Durchgangsbohrung 25, welche eine abgestufte Durchgangsbohrung 24, 25 bilden, mit dem Kanal 7b drucklos verbunden. Dabei ist außerdem der Kanal 7a gegenüber anderen Kanälen durch das Feld 9a der verschiebbaren Platte 8 abgedichtet. Für Kennzeichnungszwecke weist die gehäusefest montierte Platte 21, wie in Fig. 1 gezeigt, neben den Durchgangsbohrungen 24 und 25 einen Richtungspfeil auf. Dieser Richtungspfeil wird in anderen Beispielen nach Fig. 2, 3 und 4 zur Kennzeichnung der Einbaulage diese Platte 21 herangezogen.

Die in Fig. 1 gezeigte Ventileinrichtung kann als ein Ventil mit geschlossener Mittelstellung beschrieben werden, weil in der "Mittel" - oder "Zu" - Stellung, wie in Fig. 4b gezeigt, alle Kanäle 5, 6a, 6b, 7a und 7b, die entweder für Entlüftungs- bzw. Rücklaufzwecke oder als Druckmittel-Ein- oder Auslässe dienen, gegeneinander abgedichtet sind. Dieser Ventiltyp bietet beispielsweise bei der Steuerung von doppeltwirkenden Zylindern, die gewünschte "Zu"-Stellung, wodurch der Zylinder nicht nur in beiden Richtungen steuerbar ist sondern zusätzlich in der Mittelstellung der Ventileinrichtung in seiner eingenommenen Position gehalten werden kann.

Durch die Anordnung von abgestuften Durchgangsbohrungen 22, 23, bzw. 24, 25 in der gehäusefest montierten Platte 21 wird erreicht, daß die Ventileinrichtung nach Fig. 1 allein durch vertauschen der an der verschiebbaren Platte 8 anliegenden Fläche der gehäusefest montierten Platte 21 leicht in eine Ausführung mit offener oder entlüfteter Mittelstellung, wie in Fig. 3b gezeigt, umgewandelt werden kann.

Das Drehen oder Wenden der gehäusefest montierten Platte 21 bewirkt eine andere Ventilfunktion in der Mittelstellung unter Verwendung der gleichen Ventilteile. In Fig. 3 ist erkennbar, daß der Richtungspfeil der gehäusefest eingebrachten Platte 21 nach unten zeigt. Bei in Baukastenweise aufgebauten Steuerventilen des Typs nach Fig. 1 ist eine entsprechende Demontage schnell durchgeführt, so daß die gehäusefeste Platte 21 einfach demontiert und in der gewendeten Lage wieder gehäusefest montiert werden kann.

Wie Fig. 1 entnehmbar ist, weist die gehäusefest montierte Platte 21 an jedem Ende eine abgestufte Durchgangsbohrung 22 und 23 bzw. 24 und 25 auf. Diese abgestuften Durchgangsbohrungen 22 und 23 bzw. 24 und 25 gewährleisten, daß auf einer Seite der Platte 21, nämlich entsprechend dem Richtungspfeil der Oberseite, der Abstand zwischen den den Durchgangsbohrungen 22, 26a, 27, 26b und 24 zugeordneten Ein- und Auslässen im wesentlichen einheitlich ist. Sobald aber die gehäusefest montierte Platte 21 gewendet wird und die abgestuften Durchgangsbohrungen 23 und 25 größeren Durchmessers der verschiebbaren Platte 8 zugewandt sind, ist der kleinste Abstand zwischen den den Durchgangsbohrungen 23 und 26a bzw. 25 und 26b zugeordneten Auslässen und Entlüftungen bzw. Rückläufen bedeutend verringert, so daß das im Bereich dieser Abstände jeweils anliegende Feld 9a bzw. 9c die abgestuften Durchgangsbohrungen 23 bzw. 25 nicht mehr überdecken und damit nicht sperren kann, solange die Ventileinrichtung seine Mittelstellung aufweist.

Die in Fig. 2 gezeigte Draufsicht der gehäusefest montierten Platte 21 nach Fig. 1 läßt den gegenüber den Durchgangsbohrungen 22 und 24 vergrößerten Durchmesser der abgestuften Durchgangsbohrungen 23 und 25 deutlich erkennen. Wie ersichtlich, weisen die Durchgangsbohrungen 26a, 26b und 27 im wesentlichen einen gleichen Durchmesser auf. Es ist außerdem erkennbar, daß der kleinste Abstand zwischen der Durchgangsbohrung 26a und dem Teil größeren Durchmessers der abgestuften Durchgangsbohrung 23, 24 viel kleiner ist als der kleinste Abstand zwischen der Durchgangsbohrung 26a und dem Teil kleineren Durchmessers der abgestuften Durchgangsbohrung 22, 23. In gleicher Weise ist der kleinste Abstand zwischen dem größeren Teil größeren Durchmessers der abgestuften Durchgangsbohrung 24, 25 und der Durchgangsbohrung 26b viel kleiner als der kleinste Abstand zwischen dem Teil kleineren Durchmessers der abgestuften Durchgangsbohrung 24, 25 und der Durchgangsbohrung 26b. Die gehäusefest montierte Platte 21 weist, wie gezeigt, einen rechteckigen Querschnitt auf, aber auch andere im wesentlichen symmetrische Querschnittsformen sind anwendbar, wenn diese nach einem Wenden oder Drehen auch eine geeignete Lage der Durchgangsbohrungen in Bezug auf die Aussparungen der verschiebbaren Platte 8 aufweisen.

In den Fig. 4a, 4b und 4c sind die Stellungen der gehäusefest montierten Platte 21 und der verschiebbaren Platte 8 in den drei Ventilstellungen der Ventileinrichtung nach Fig. 1 gezeigt. Fig. 4a zeigt die verschiebbare Platte 8 in einer bei druckmittelbeaufschlagter Steuerdruckleitung 4b entsprechenden Stellung, wobei die Kolbeneinheit 2a, 2b und 2c nach Fig. 1 in ihre linke Endlage bewegt ist. Es ist erkennbar, daß die Durchgangsbohrung 27 mit der Durchgangsbohrung 26b verbunden ist, während gleichzeitig die Durchgangsbohrung 26a über die Aussparung 10a in Verbindung mit der abgestuften Durchgangsbohrung 22, 23 steht.

Fig. 4b zeigt die Stellung der verschiebbaren Platte 8, wenn keine der Steuerleitungen 4a und 4b druckmittelbeaufschlagt ist oder keine Druckdifferenz zwischen den Steuerleitungen 4a und 4b besteht. Die verschiebbare Platte 8 nimmt im wesentlichen innerhalb des Gehäuses 1 eine Mittellage ein und die Durchgangsbohrung 27 ist durch das Feld 9b gesperrt. Dies ist die bereits erwähnte geschlossene Mittelstellung und alle Einmündungen der Durchgangsbohrungen 22, 26a, 27 und 26b und 24 sind durch zugehörige Felder 9a, 9b und 9c gesperrt.

Fig. 4c zeigt die verschiebbare Platte 8 in einer Rechtsstellung entsprechend einer druckmittelbeaufschlagten Steuerleitung 4a. In dieser Ventilstellung ist die Durchgangsbohrung 27 in Verbindung mit der Durchgangsbohrung 25a. Die Durchgangsbohrung 26b ist mit der Durchgangsbohrung 24, beispielsweise einer Entlüftung oder einem Rücklauf, verbunden.

Fig. 3 zeigt die gleichen Ventilstellungen wie Fig. 4, jedoch mit der umgekehrt, gehäusefest montierten Platte 21, was durch den abwärts weisenden Richtungspfeil erkennbar ist. Bei umgekehrt gehäusefest eingebrachter Platte 21 sind die Teile größeren Durchmessers der abgestuften Durchgangsbohrungen 22, 23 und 24, 25 der verschiebbaren Platte 8 zugewandt, was eine Umstellung der Ventileinrichtung auf eine Funktion mit offener, beispielsweise druckentlasteter Mittelstellung, zur Folge hat.

In Fig. 3a verbindet die Aussparung 10a die abgestufte Durchgangsbohrung 23 mit der Durchgangsbohrung 26a. Die Durchgangsbohrung 27 ist jetzt über die Aussparung 10b mit der Durchgangsbohrung 26b verbunden.

Fig. 3b zeigt die bei drucklosen oder druckausgeglichenen Steuerleitungen 4a oder 4b gegebene Mittelstellung der Ventileinrichtung. Während das Feld 9b die Durchgangsbohrung 27 schließt, verbinden die Aussparungen 10a und 10b jeweils die Durchgangsbohrungen 26a bzw. 26b mit dem Teil größeren Durchmessers der abgestuften Durchgangsbohrungen 23, 22 bzw. 25, 24. Diese Ventilstellung entspricht der Entlüftung beider Auslaßkanäle in einer "Mittel"- oder "Neutral"-Stellung eines Steuerventils. Diese Stellung nach Fig. 3b steht im krassen Gegensatz zu der geschlossenen Mittelstellung nach Fig. 4b. Auf diese Art kann die in Fig. 1 gezeigte Ventileinrichtung entweder auf eine Ventileinrichtung mit offener Mittelstellung (Fig. 3b) oder eine Ventileinrichtung mit geschlossener Mittelstellung (Fig. 4b) verändert werden. Der einzige Unterschied zwischen den Ventilteilen nach den Fig. 3b und 4b besteht darin, daß die gehäusefest montierte Platte 21 gewendet worden ist. Der Richtungspfeil in Fig. 3b weist abwärts, während der Richtungspfeil in Fig. 4b aufwärts weist.

Fig. 3c zeigt die verschiebbare Platte 8 in rechter Ventilstellung. Die Durchgangsbohrung 27 ist über die Aussparung 10a mit der Durchgangsbohrung 26a verbunden, während die Durchgangsbohrung 26b über die Aussparung 10b mit dem Teil größeren Durchmessers der abgestuften Durchgangsbohrung 25, 24 verbunden ist.

Bei Betrachtung des gegenwärtig bevorzugten und in der Zeichnung dargestellten Ausführungsbeispiels ist es offensichtlich, daß die hier vorgetragene Erfindung auch bei anderen Arten von Steuerventilen mit einer bewegbaren oder gleitend verschiebbaren Platte anwendbar ist, indem zwischen der verschiebbaren Platte und den Gehäusekanälen eine entsprechende, gehäusefest montierte Platte lösbar angeordnet wird. Der Fig. 1 ist entnehmbar, daß die Anordnung einer abgestuften Durchgangsbohrung mit einem Teil größeren Durchmessers auch dann unproblematisch ist, wenn der Teil größeren Durchmessers von der verschiebbaren Platte abgewandt angeordnet ist. Der Teil größeren Durchmessers der abgestuften Durchgangsbohrung 22, 23 bzw. 24, 25 ermöglicht, daß die Ventileinrichtung je nach Einbaulage der gehäusefest montierten Platte 21 geschlossen oder offen bleibt und bewirkt im Zusammenhang mit der verschiebbaren Platte 8, daß die diesbezügliche Ventilwirkung beim Umschalten der Ventilstellungen früher einsetzt. Es ist auch möglich, daß in einigen Anwendungsfällen nur eine einzelne Aussparung 10a oder 10b in der verschiebbaren Platte genutzt wird, während in anderen Anwendungsfällen mehrere Aussparungen 10a oder 10b in der bewegbaren Platte 8 vorgesehen werden, so daß eine Vielzahl von Kanälen untereinander verbindbar ist. Während hier nur gewisse, gegenwärtig bevorzugte Ausführungsbeispiele gezeigt und erläutert wurden, versteht es sich, daß die Erfindung nicht darauf beschränkt, sondern auch in vielen anderen Anwendungen innerhalb des Umfangs der folgenden Patentansprüche nutzbar ist.

**Patentansprüche**

1. Ventileinrichtung mit einstellbarer Funktion, mit:
   a) einem Gehäuse (1);
   b) Betätigungsmitteln (2a, 2b, 2c, 3a und 3b), mit welchen vorbestimmte Ventilstellungen der Ventileinrichtung einstellbar sind;
   c) einer mittels der Betätigungsmittel in axialer Richtung verschiebbaren Platte (8), welche wenigstens eine Aussparung (10a bzw. 10b) aufweist;
   d) mehreren in dem Gehäuse (1) angeordneten, druckmittelbeaufschlagbaren Kanälen (7a, 6a, 5, 6b und 7b), welche mit Druckmitteleinrichtungen verbindbar sind;
   e) einer zwischen den Kanälen (7a, 6a, 5, 6b und 7b) und der verschiebbaren Platte (8) gehäusefest montiert angeordneten Platte (21), wobei
   f) die gehäusefeste Platte (21) mehrere Durchgangsbohrungen (22, 26a, 27, 26b und 24) aufweist und
   g) wenigstens eine Durchgangsbohrung (22, 26a, 27, 26b und/oder 24) auf einer Seite der gehäusefesten Platte (21) einen vergrößerten Öffnungsdurchmesser aufweist;
   dadurch gekennzeichnet, daß
   h) die gehäusefeste Platte (21) lösbar ist und in der senkrecht zu den Achsen der Durchgangsbohrungen (22, 26a, 27, 26b und 24) liegenden Ebene im wesentlichen symmetrisch ausgebildet ist, so daß die gehäusefeste Platte (21) mit dem größeren Öffnungsdurchmesser der Durchgangsbohrung (22, 23 bzw. 24, 25) entweder der verschiebbaren Platte (8) oder dem entsprechenden Kanal (7a, 6a, 5, 6b oder 7b) zugewandt angeordnet werden kann.

2. Ventileinrichtung nach dem Anspruch 1 für ein 3-Stellungsventil, dadurch gekennzeichnet, daß
   a) die verschiebbare Platte (8) zwei Aussparungen (10a und 10b) aufweist und in zwei Richtungen in den drei Ventilstellungen betätigbar ist;
   b) zwei Durchgangsbohrungen (22 und 24) als abgestufte Durchgangsbohrungen (22, 23 und 24, 25) ausgebildet sind, welche ihren Teil größeren Durchmessers an einer Seite der gehäusefesten Platte (21) derart aufweisen, daß die gehäusefeste Platte (21) umgekehrt montierbar ist, so daß die abgestuften Durchgangsbohrungen (22, 23 und 24, 25) in einer von den Betätigungsmitteln vorgegebenen Mittelstellung entweder von den beiden Aussparungen (10a und 10b) gesperrt oder mit diesen verbunden sind.

3. Ventileinrichtung nach einem der Ansprüche 1 oder 2, dadurch gekennzeichnet, daß die gehäusefeste Platte (21) einen im wesentlichen rechteckigen Querschnitt aufweist.

4. Ventileinrichtung nach einem der vorhergehenden Ansprüche, dadurch gekennzeichnet, daß den Betätigungsmitteln ein nach unten offener Kanal zugeordnet ist, in welchem die verschiebbare Platte (8) eingebracht ist.

5. Ventileinrichtung nach einem der vorhergehenden Ansprüche, dadurch gekennzeichnet, daß wenigstens eine Durchgangsbohrung (22, 26a, 27, 26b und/oder 24) als abgestufte Durchgangsbohrung (22, 23 bzw. 24, 25) mit einem Teil größeren Durchmessers an einem Ende und einem Teil kleineren Durchmessers an dem anderen Ende ausgebildet ist.

6. Ventileinrichtung nach einem der vorhergehenden Ansprüche, dadurch gekennzeichnet, daß die verschiebbare Platte (8) mit den Betätigungsmitteln in beide Richtungen druckmittelbetätigbar ist.

7. Gehäusefest montierbare Platte für eine Ventileinrichtung nach einem der Ansprüche 1 bis 6, dadurch gekennzeichnet, daß
   a) die gehäusefest montierbare Platte (21) mehrere Durchgangsbohrungen (22, 26a, 27, 26b und/oder 24) aufweist;
   b) wenigstens zwei der Durchgangsbohrungen (22, 26a, 27, 26b und/oder 24) einen vergrößerten Durchmesser an einer Seite der gehäusefesten Platte (21) aufweisen.

8. Gehäusefest montierbare Platte nach dem Anspruch 7, dadurch gekennzeichnet, daß die gehäusefest montierbare Platte (21) in der senkrecht zu den Achsen der Durchgangsbohrungen (22, 26a, 27, 26b und 24) liegenden Ebene im wesentlichen symmetrisch ausgebildet ist.

9. Gehäusefest montierbare Platte nach einem der Ansprüche 7 oder 8, dadurch gekennzeichnet, daß die gehäusefest montierbare Platte (21) einen im wesentlichen rechteckigen Querschnitt aufweist.

10. Gehäusefest montierbare Platte nach einem der Ansprüche 7 bis 9, dadurch gekennzeichnet, daß wenigstens zwei der Durchgangsbohrungen (22, 26a, 27, 26b oder 24) als abgestufte Durchgangsbohrungen (22, 23 und 24, 25) ausgebildet und mit dem Teil größeren Durchmessers auf einer Seite der gehäusefest montierbaren Platte (21) angeordnet sind.

11. Gehäusefest montierbare Platte nach dem Anspruch 10, dadurch gekennzeichnet, daß fünf Durchgangsbohrungen (22, 26a, 27, 26b und 24) vorgesehen sind, die im wesentlichen linear und mit gleichmäßigem Abstand angeordnet sind, und daß die abgestuften Durchgangsbohrungen (22, 23 und 24, 25) gegenüberliegend an den Enden dieser linearen Anordnung in die gehäusefeste Platte (21) eingebracht sind.

## Claims

1. Valve device of variable function, having:
   a) a housing (1);
   b) operating means (2a, 2b, 2c, 3a and 3b) with which predetermined valve positions of the valve device can be set;
   c) a plate (8) displaceable in an axial direction by the operating means and having at least one recess (10a and 10b);
   d) a plurality of pressure medium channels (7a, 6a, 5, 6b and 7b) in the housing (1) connectible to pressure medium devices;
   e) a plate (21) fixedly mounted with respect to the housing and located between the channels (7a, 6a, 5, 6b and 7b) and the displaceable plate (8);
   f) the plate (21) fixed with respect to the housing having several through-bores (22, 26a, 27, 26b and 24) and
   g) at least one through-bore (22, 26a, 27, 26b and/or 24) having an increased opening diameter on one side of the plate (21) fixed with respect to the housing;
   characterised in that
   h) the plate (21) fixed with respect to the housing is detachable and is constructed to be substantially symmetrical in the plane perpendicular to the axes of the through-bores (22, 26a, 27, 26b and 24) so that the plate (21) fixed with respect to the housing can be arranged with the greater opening diameter of the through-bore (22, 23 or 24, 25) either facing the displaceable plate (8) or facing the corresponding channel (7a, 6a, 5, 6b or 7b).

2. Valve device according to claim 1 for a 3-position valve,
   characterised in that
   a) the displaceable plate (8) has two recesses (10a and 10b) and can be moved in two directions to give three valve positions;
   b) two of the through-bores (22 and 24) are constructed in the form of stepped through-bores (22, 23 and 24, 25) which have their portion of greater diameter on one side of the plate (21) fixed with respect to the housing, in such a manner that the plate (21) fixed with respect to the housing can be mounted in an inverted position so that in a central position predetermined by the operating means the stepped through-bores (22, 23 and 24, 25) are either blocked by the two recesses (10a and 10b) or are connected therewith.

3. Valve device according to claim 1 or 2, characterised in that the plate (21) fixed with respect to the housing has a substantially rectangular cross-section.

4. Valve device according to any one of the preceding claims, characterised in that the operating means are provided with a channel which is open towards the bottom and in which the displaceable plate (8) is installed.

5. Valve device according to any one of the preceding claims, characterised in that at least one throughbore (22, 26a, 27, 26b and/or 24) is constructed in the form of a stepped through-bore (22, 23 and 24, 25) with a portion of greater diameter at one end and a portion of smaller diameter at the other end.

6. Valve device according to any one of the preceding claims, characterised in that the displaceable plate (8) is movable in both directions with the operating means by a pressure medium.

7. Plate for fixed mounting in a housing for a valve device according to any one of claims 1 to 6,
   characterised in that
   a) the plate (21) for fixed mounting in the housing has a plurality of through-bores (22, 26a, 27, 26b and/or 24), and
   b) at least two of the through-bores (22, 26a, 27, 26b and/or 24) have an increased diameter on one side of the plate (21) fixed with respect to the housing.

8. Plate for fixed mounting in a housing according to claim 7, characterised in that the plate (21) for fixed mounting in the housing is constructed to be substantially symmetrical in the plane perpendicular to the axes of the through-bores (22, 26a, 27, 26b and 24).

9. Plate for fixed mounting in a housing according to claim 7 or 8, characterised in that the plate (21) for fixed mounting in the housing has a substantially rectangular cross-section.

10. Plate for fixed mounting in a housing according any one of claims 7 to 9, characterised in that at least two of the through-bores (22, 26a, 27, 26b and 24) are constructed in the form of stepped throughbores (22, 23 and 24, 25) and are arranged with their portion of greater diameter on one side of the plate (21) for fixed mounting in the housing.

11. Plate for fixed mounting in a housing according to claim 10, <u>characterised in that</u> there are provided five through-bores (22, 26a, 27, 26b and 24) which are arranged substantially in a line and at equal spacing, and the stepped through-bores (22, 23 and 24, 25) are installed in the plate (21) fixed with respect to the housing at opposite ends of the line.

## Revendications

1. Dispositif obturateur ou de distribution à fonction réglable, comprenant:

a) un corps (1);

b) des moyens de commande (2a, 2b, 2c, 3a et 3b) à l'aide desquels on peut imposer des positions de distribution prédéterminées au dispositif obturateur ou de distribution;

c) une plaque (8) qui peut être déplacée en translation à l'aide des moyens de commande et qui présente au moins un évidement (10a ou 10b);

d) plusieurs conduits (7a, 6a, 5, 6b et 7b) agencés dans le corps (1) et pouvant recevoir du fluide sous pression, et qui peuvent être reliés à des dispositifs à fluide sous pression,

e) une plaque (21) montée fixe par rapport au corps, appelée plaque fixe, interposée entre les conduits (7a, 6a, 5, 6b et 7b) et la plaque coulissante (8);

f) la plaque fixe (21) présente plusieurs perçages traversants (22, 26a, 27, 26b et 24); et

g) au moins un perçage traversant (22, 26a, 27, 26b et/ou 24) situé sur un côté de la plaque fixe (21) présente un diamètre d'ouverture agrandi,

caractérisé en ce que

h) la plaque fixe (21) est amovible et est de configuration sensiblement symétrique dans le plan orienté perpendiculairement aux axes des perçages traversants (22, 26a, 27, 26b et 24), de sorte que la plaque fixe (21) peut être disposée de façon que le grand diamètre d'ouverture du perçage traversant (22, 23 ou 24, 25) soit dirigé, soit vers la plaque coulissante (8), soit vers le conduit correspondant (7a, 6a, 5, 6b ou 7b).

2. Dispositif obturateur ou de distribution selon la revendication 1 pour un distributeur à trois positions, caractérisé en ce que

a) la plaque coulissante (8) présente deux évidements (10a et 10b) et peut être manoeuvrée dans deux sens et amenée dans les trois positions de distribution;

b) deux perçages traversants (22 et 24) sont constitués sous la forme de perçages traversants étagés (22, 23 et 24, 25) qui présentent leur partie de grand diamètre sur une face de la plaque fixe (21), de telle manière que la plaque fixe (21) puisse être montée inversée, de sorte que, dans une position centrale prédéterminée par les moyens de commande, les perçages traversants étagés (22, 23 et 24, 25) peuvent être, soit isolés des deux évidements (10a et 10b), soit reliés à ceux-ci.

3. Dispositif obturateur ou de distribution selon l'une des revendications 1 et 2, caractérisé en ce que la plaque fixe (21) présente une section sensiblement rectangulaire.

4. Dispositif obturateur ou de distribution selon l'une des revendications précédentes, caractérisé en ce qu'aux moyens de commande est associé une rainure ouverte vers le bas, dans laquelle la plaque coulissante (8) est logée.

5. Dispositif obturateur ou de distribution selon l'une des revendications précédentes, caractérisé en ce qu'au moins un perçage traversant (22, 26a, 27, 26b et/ou 24) est constitué par un perçage traversant étagé (22, 23 ou 24, 25) possédant une partie de grand diamètre à une extrémité et une partie de plus petit diamètre à l'autre extrémité.

6. Dispositif obturateur ou de distribution selon l'une des revendications précédentes, caractérisé en ce que la plaque coulissante (8) peut être actionnée par un fluide sous pression dans les deux sens sous l'action des moyens de commande.

7. Plaque pouvant être montée fixe par rapport au corps pour un dispositif obturateur ou de distribution selon l'une des revendications 1 à 6, caractérisé en ce que:

a) la plaque (21) pouvant être montée fixe par rapport au corps présente plusieurs perçages traversants (22, 26a, 27, 26b et/ou 24);

b) au moins deux des perçages traversants (22, 26a, 27, 26b et/ou 24) présente un diamètre agrandi sur une face de la plaque (21) fixe par rapport au corps.

8. Plaque pouvant être montée fixe par rapport au corps selon la revendication 2, caractérisée en ce que la plaque (21) pouvant être montée fixe par rapport au corps est de configuration sensiblement symétrique dans le plan qui s'étend perpendiculairement aux axes des perçages traversants (22, 26a, 27, 26b et 24).

9. Plaque pouvant être montée fixe par rapport au corps selon l'une des revendications 7 et 8, caractérisée en ce que la plaque (21) pouvant être montée fixe par rapport au corps présente une section sensiblement rectangulaire.

10. Plaque pouvant être montée fixe par rapport au corps selon l'une des revendications 7 à 9, caractérisée en ce qu'au moins deux des perçages traversants (22, 26a, 27, 26b et 24) sont constitués par des perçages traversants étagés (22, 23 et 24, 25) et disposés avec leur partie de grand diamètre sur une face de la plaque (21) pouvant être monté fixe par rapport au corps.

11. Plaque pouvant être montée fixe par rapport au corps selon la revendication 10, caractérisée en ce qu'il y est prévu cinq perçages traversants (22, 26a, 27, 26b et 24) qui sont disposés sensiblement en ligne et avec un écartement uniforme et en ce que les perçages traversants étagés (22, 23 et 24, 25) sont agencés dans la plaque (21) fixe par rapport au corps, l'un à l'opposé de l'autre, aux extrémités de cette série en ligne.

Fig.1

Fig.2

Fig. 3a

Fig. 3b

Fig. 3c

Fig. 4a

Fig. 4b

Fig. 4c